# EUROPÄISCHE PATENTSCHRIFT

(11) **EP 0 685 323 B1**
(45) Veröffentlichungstag und Bekanntmachung des Hinweises auf die Patenterteilung: **29.12.1997**
(21) Anmeldenummer: 95108071.2
(22) Anmeldetag: 26.05.1995
(51) Int. Cl.: B29D 30/30

(54) **Verfahren zum Auflegen der an einer Gürtelaufbautrommel benötigten Länge aus vorabgelängtem, zu quasi endlos gespleisstem Laufstreifenmaterial**
Method for laying-up of cut-to-length, spliced to a semi endless state tread material on a belt building drum
Procédé pour la mise en place dans un tambour de ceinture, d'une longueur de bande de roulement précoupée et épissée de façon semi-continue

(30) Priorität: 04.06.1994 DE 4419645
(43) Veröffentlichungstag der Anmeldung: 06.12.1995
(73) Patentinhaber: Continental Aktiengesellschaft, 30165 Hannover (DE)
(72) Erfinder: Gerloff, Klaus, D-30916 Isernhagen (DE)

(56) Entgegenhaltungen:
- DE-A- 2 846 006
- DE-A- 3 917 941
- US-A- 4 729 521

## Beschreibung

Die Erfindung betrifft zunächst ein Verfahren zum Erfassen und Auflegen der jeweils benötigten Länge eines auf einer Gürtelaufbautrommel zu verarbeitenden Laufstreifens, der abgelängt aus einer Vorratsvorrichtung einem der Gürtelaufbautrommel zugeordneten Förderband zugeführt wird und die jeweils benötigte Länge eines auf der Gürtelaufbautrommel zu verarbeitenden Laufstreifens mit einem Ablängmesser auf Länge geschnitten wird, wobei mittels einer den aktuellen Durchmesser oder Umfang der Gürtelaufbautrommel messenden Meßeinrichtung die aktuell benötigte Laufstreifenlänge festgestellt wird.

Zur Herstellung von Kfz-Reifen-Laufstreifen werden die Laufstreifen auf Länge geschnitten und in einen sogenannten Buchwagen abgelegt. Mit diesem Buchwagen können die Laufstreifen zu der Gürtelaufbautrommel transportiert werden.

Durch den fortschreitenden Aufbau des Gürtelpaketes entstehen zwangsläufig Schwankungen im aktuellen Durchmesser der Gürtelaufbautrommel. Die aktuellen benötigten Längen des Laufstreifenmaterials variieren dadurch und müssen angepaßt und entsprechend abgelängt werden. Die Verwendung von vorabgelängten Laufstreifen hat zwar den Vorteil relativer Flexibilität, beeinflußt aber die Gleichförmigkeit des Reifens. Da nämlich die Laufstreifenlänge nicht dem aktuellen Außendurchmesser des Gürtelpaketes entspricht, muß der Laufstreifen beim Auflegen im Bereich den Spleißes entweder gereckt oder gestaucht werden. Dies führt zu einer ungleichen Materialverteilung des Laufstreifens über dem Umfang.

Bei relativ langen und schweren Laufstreifen, wie sie insbesondere bei der Herstellung von Lkw-Reifen auftreten, wird der Laufstreifen beim Auflegen auf die Pfanne des Laufstreifenservicers in der Mitte geknickt und beim Abnehmen wieder gestreckt. Dadurch können Verdünnungen in dem Bereich des Knicks stattfinden, die ebenfalls zu ungleichen Massenverteilungen über dem Umfang führen.

Bei einem anderen Verfahren wird ein endlos extrudiertes Laufstreifenband in eine Kassette eingewickelt und so für eine größere Anzahl von Reifen bevorratet und transportiert.

Solche Kassetten sind sehr schwer zu handhaben und es bedarf ganz erheblicher Investitionen, die vorhandenen Anlagen auf solch riesige Kassetten umzurüsten. Ein weiteres Problem ist, daß das Material bei solchen Kassetten durchhängt, wenn sie mit waagerechter Achse stehengelassen werden. Das Material wird dadurch unten lose während es oben flach gedrückt wird. Dadurch entstehen Ungleichförmigkeiten in dem Material, die sich im Rundlauf der fertigen Reifen bemerkbar machen.

Die US-A-4 729 521 zeigt eine Vorrichtung zum Aufwickeln unvulkanisierter Kautschukstreifen gemäß dem einleitenden Teil des Anspruchs 1, bei der der äußere Umfang der Wickeltrommel mit Hilfe eines Messrades gemessen die Trommeldrehung in Drehimpulse umgewandelt und mit diesen dann die Zufuhreinrichtung gesteuert wird.

Aufgabe der vorliegenden Erfindung ist es, ein Verfahren zu schaffen, mit dem die jeweils benötigte Laufstreifenlänge dem aktuellen Trommeldurchmesser entsprechend abgelängt werden kann.

Gelöst wird diese Aufgabe dadurch, daß in der Vorratsvorrichtung vorabgelängte Laufstreifenteilstücke vorzugsweise mit einer Länge, die ungefähr der halben Luftstreifenlänge entspricht, bereitgehalten und auf das Förderband aufgelegt werden, an das hintere Ende des jeweils vorderen Laufstreifenteilstückes das nächste Laufstreifenteilstück angespleißt wird, so daß die Gesamtlänge auf dem Förderband mehr als einer Laufstreifenlänge entspricht, mittels einer den aktuellen Durchmesser oder Umfang der Gürtelaufbautrommel messenden Meßeinrichtung die aktuelle benötigte Laufstreifenlänge festgestellt wird und der so quasi endlos gewordenen Laufstreifen mit dem Ablängmesser entsprechend abgelängt wird. Es ist auch möglich, daß durch Anspließen von Teilstücken quasi endlos gemachte Laufstreifen zunächst auf die Gürtelaufbautrommel aufgewickelt werden und erst dann der Längentrennschnitt vorgenommen wird.

Durch diese Maßnahmen wird ein quasi endloser Laufstreifen geschaffen, dessen Transport und Zuführung aber wesentlich einfacher als bei endlos gewickeltem Vormaterial ist. Dadurch können die Vorteile des Endlosmaterials genutzt werden, ohne daß die damit verbundenen aufwendigen Einrichtungen an der Extruderanlage und den Wickelmaschinen geschaffen werden müssen. Außerdem kann man sich darauf beschränken, dieses Verfahren bei besonders kritischen Reifen einzusetzen, ohne die Infrastruktur der gesamten Produktionsanlage ändern zu müssen, denn die restliche Produktion kann davon unberührt bleiben.

Die zu verarbeitenden Laufstreifen bestehen aus vorabgelängten, vor dem Auflaufen auf die Gürtelaufbautrommel zu quasi endlosen Laufstreifen verspleißten Laufstreifenteilstücken.

Durch diese Maßnahme kann die Länge des jeweils benötigten Laufstreifens variabel dem jeweiligen Trommeldurchmesser entsprechend angepaßt und abgelängt werden.

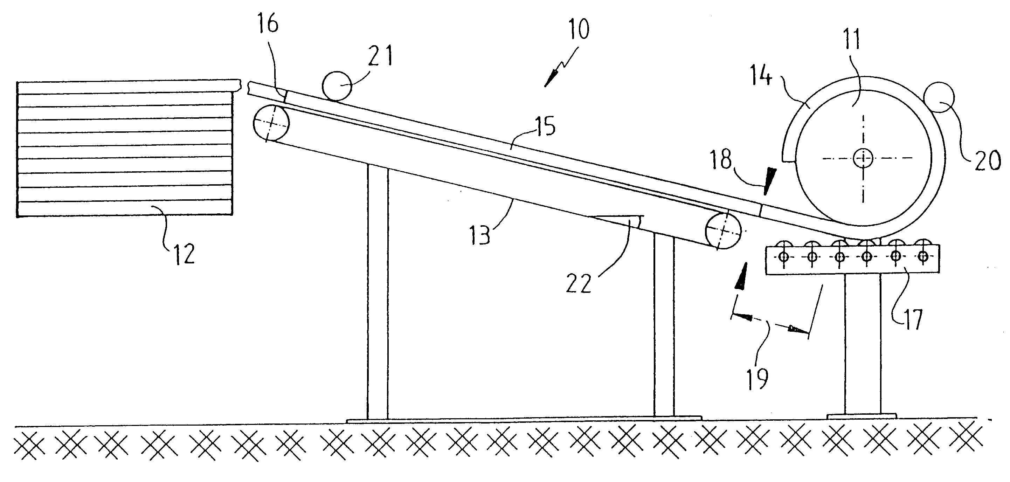

Weitere vorteilhafte Maßnahmen sind in den übrigen Unteransprüchen beschrieben. Die Erfindung ist anhand eines Ausführungsbeispieles in der beiliegenden Zeichnung dargestellt und wird nachfolgend näher beschreiben.

Die in der einzigen Figur schematisch dargestellte Reifenwickel- und Ablängvorrichtung 10 besteht im wesentlichen aus einer Gürtelaufbautrommel 11 und einer Vorratsvorrichtung in Form eines Buchwagens 12, zwischen denen ein Förderband 13 angeordnet ist. Der Gürtelaufbautrommel 11 ist in einem vorbestimmten Abstand 19 ein Ablängmesser 18 zugeordnet, mit dem der verarbeitete, teilweise auf der Gürtelaufbautrommel aufliegende Laufstreifen 14 auf die jeweils benötigte Länge so abgelängt wird, daß Anfang und Ende in einem Spleiß 16 stumpf aneinander stoßen.

Zur Feststellung der aktuellen benötigten Länge des noch auf dem Förderband 13 aufliegenden, noch zuzufördernden Laufstreifens 15 ist der Gürtelaufbautrommel 11 eine Meßeinrichtung 20, beispielsweise in Form eines Meßrades zugeordnet. Mit dieser Meßeinrichtung 20 kann der tatsächliche Durchmesser der Gürtelaufbautrommel 11, auf der schon andere Gürtellagen aufliegen können und deren Durchmesser dadurch schwanken kann, festgestellt.

Dem Förderband 13 ist eine weitere Meßeinrichtung 21 zugeordnet, mit der das Ablängmesser 18 gesteuert wird, mit welchem die zugeförderten Laufstreifenteilstücke 15 auf die von der ersten Meßeinrichtung 20 festgestellte benötigte Länge abgelängt werden können.

Dem der Gürtelaufbautrommel 11 zugeordneten freien Ende des Förderbandes 13 ist auf der dem Ablängmesser 18 abgewandten Seite eine Abstützung 17, beispielsweise in Form einer Allwegrollenanordnung oder eines Tisches zugeordnet, um den abgelängten Laufstreifen 14 sauber auf die Gürtelaufbautrommel 11 auflegen zu können.

Das Förderband 13 ist mit einem Neigungswinkel 22 versehen, der ca. 30° beträgt. Das Ablängmesser 18 ist in einem vorbestimmten Abstand 19 von der Gürtelaufbautrommel 11 vorgesehen, wobei dieser Abstand 19 möglichst gering sein sollte.

Die Laufstreifenteilstücke 15 sind auf eine Länge vorgeschnitten, die kleiner als der Umfang der Gürtelaufbautrommel 11 ist, vorzugsweise beträgt sie etwas mehr als ½ des Trommelumfangs. Sie werden in einem Buchwagen 13 zur Weiterverarbeitung transportiert und auf dem Förderband 13 in einem Spleiß 16 zu einem quasi endlosen Laufstreifen 15 verspleißt. Dieser quasi endlose Laufstreifen 15 kann dann mit einem der Gürtelaufbautrommel 11 zugeordneten Ablängmesser 18 auf die endgültig benötigte Länge geschnitten werden. Auch hierbei ist eine Abstützung 17 für die abgelängten Laufstreifen 14 in Form von Allwegrollen oder eines Tisches vorgesehen.

### Bezugszeichen

- 10: Reifenwickel- und Ablängvorrichtung
- 11: Gürtelaufbautrommel
- 12: Buchwagen
- 13: Förderband
- 14: aufgelegter Laufstreifen
- 15: Laufstreifenteilstück
- 16: Spleiß
- 17: Abstützung
- 18: Ablängmesser
- 19: Abstand
- 20: Meßeinrichtung
- 21: Meßeinrichtung
- 22: Neigungswinkel

## Patentansprüche

1. Verfahren zum Erfassen und Auflegen der jeweils benötigten Länge eines auf einer Gürtelaufbautrommel (11) zu verarbeitenden Laufstreifens, der abgelängt aus einer Vorratsvorrichtung (12) einem der Gürtelaufbautrommel (11) zugeordneten Förderband (13) zugeführt wird und die jeweils benötigte Länge eines auf der Gürtelaufbautrommel (11) zu verarbeitenden Laufstreifens mit einer Ablängvorrichtung (10) auf Länge geschnitten wird, wobei mittels einer den aktuellen Durchmesser oder Umfang der Gürtelaufbautrommel (11) messenden Meßeinrichtung (20) die aktuelle benötigte Laufstreifenlänge festgestellt wird, dadurch gekennzeichnet, daß in der Vorratsvorrichtung (12) vorabgelängte Laufstreifenteilstücke (15) vorzugsweise mit einer Länge, die ungefähr der halben Luftstreifenlänge entspricht, bereitgehalten und auf das Förderband (13) aufgelegt werden, an das hintere Ende des jeweils vorderen Laufstreifenteilstückes (15) das nächste Laufstreifenteilstück (15) angespleißt wird, so daß die Gesamtlänge auf dem Förderband (13) mehr als einer Laufstreifenlänge entspricht, und der so quasi endlos gewordene Laufstreifen mit dem Ablängmesser (18) entsprechend abgelängt wird.

2. Verfahren nach Anspruch 1, dadurch gekennzeichnet, daß der quasi endlose Laufstreifen vor dem Ablängen auf die Gürtelaufbautrommel (11) aufgelegt wird und die Ablängung danach erfolgt.

## Claims

1. Method of determining and applying the actually required length of a tread strip, which is to be processed on a belt building drum (11) and is supplied, cut-to-length, from a supply device (12) to a conveyor belt (13) associated with the belt building drum (11), and the actually required length of a tread strip, which is to be processed on the belt building drum (11), is cut to length by a cutting-to-length device (10), the actually required tread strip length being ascertained by means of a measuring arrangement (20), which measures the actual diameter or circumference of the belt building drum (11), characterized in that tread strip portions (15), which have previously been cut-to-length in the supply device (12), are preferably prepared with a length which corresponds to approximately half the tread strip length and are laid upon the conveyor belt (13), the next tread strip portion (15) being joined to the rear end of the respective front tread strip portion (15), so that the overall length on the conveyor belt (13) corresponds to more than one tread strip length, and the tread strip, which has thus become quasi endless, is accordingly cut to length with the length cutter (18).

2. Method according to claim 1, characterised in that the quasi endless tread strip is laid upon the belt building drum (11) prior to being cut to length, and the cutting-to-length operation is effected subsequently.

## Revendications

1. Procédé pour prendre et appliquer la longueur à chaque fois nécessaire d'une bande de roulement à façonner sur un tambour (11) de confection de ceinture, laquelle bande de roulement, découpée à la longueur, est acheminée jusqu'à une bande transporteuse (13) associée au tambour (11) de confection de ceinture, à partir d'un dispositif de stockage (12), et la longueur nécessitée à chaque fois d'une bande de roulement à façonner sur le tambour (11) de confection de ceinture est découpée à la longueur avec un dispositif (10) de coupe à la longueur, auquel cas, au moyen d'un dispositif de mesure (20) mesurant le diamètre réel ou la circonférence du tambour (11) de confection de ceinture, on constate la longueur de la bande de roulement réellement nécessaire,
caractérisé
en ce que, dans le dispositif de stockage (12), des segments (15) de bande de roulement prédécoupés à la longueur, de préférence en ayant une longueur qui correspond à peu près à la demi-longueur de la bande de roulement, sont tenus à disposition et sont posés sur la bande transporteuse (13),
en ce que le segment suivant (15) de la bande de roulement est joint au niveau de l'extrémité arrière du segment (15) de la bande de roulement qui à chaque fois le précède, de sorte que la longueur totale sur la bande transporteuse (13) est supérieure à une longueur de la bande de roulement, et
en ce que la bande de roulement formée quasiment en continu est découpée à la longueur de façon adéquate avec l'outil (18) de coupe à la longueur.

2. Procédé selon la revendication 1, caractérisé en ce que la bande de roulement quasi continue, avant d'être découpée à la longueur, est appliquée sur le tambour (11) de confection de ceinture et en ce que la coupe à la longueur se produit après l'application sur le tambour.
